# EUROPÄISCHE PATENTANMELDUNG

(11) **EP 4 683 312 A1**
(43) Veröffentlichungstag der Anmeldung: **21.01.2026**
(21) Anmeldenummer: 24189747.9
(22) Anmeldetag: 19.07.2024
(51) Int. Cl.: H04N 1/00

(54) **VERFAHREN ZUR DOKUMENTENTRENNUNG UND/ODER INDEXIERUNG BEI BELEGEN**

(71) Anmelder: Randler, Andreas, 70180 Stuttgart (DE)
(72) Erfinder: Randler, Andreas, 70180 Stuttgart (DE)
(74) Vertreter: Limbeck, Achim

(57) **Zusammenfassung**

Die vorliegende Erfindung betrifft ein Verfahren zur Dokumententrennung und/oder Indexierung bei Belegen, die in einem Dokumentenstapel (1) mit mehreren ein- oder mehrseitigen Dokumenten (10) sowie zwischen den einzelnen Dokumenten (10) eingebrachten Trennblättern (11) gescannt werden, welches folgende aufeinanderfolgende Verfahrensschritte umfasst:
a) Empfang von Scanbildern durch optisches Scannen einer Folge von Seiten des Dokumentenstapels (1) mittels eines Scanners;
b) Verarbeitung der einzelnen Scanbilder zur Erzeugung von elektronischen Seitenbildern in einem elektronischen Scandokument, die in ihrer Bildgröße den ursprünglichen Seiten der Dokumente (10) und den ursprünglichen Trennblättern (11) entsprechen;
c) Festlegung unterschiedlicher Kriterien für Bildparameter, nämlich der Bildgröße der Seiten der Dokumente und/oder der Trennblätter (11), die entweder automatisch während der Verarbeitung der elektronischen Scanbilder auf der Grundlage von Eigenschaften des Dokumentenstapels (1) abgeleitet oder im Vorfeld einer nachfolgenden Überprüfung durch den Anwender festgelegt werden;
d) Durchführung einer Überprüfung, ob die Bildgröße eines elektronischen Scanbildes innerhalb des Scandokuments den festgelegten Kriterien entspricht;
e) entspricht die Bildgröße eines elektronischen Scanbildes der Bildgröße des eingescannten Trennblattes (11) und/oder dem durch den Anwender festgelegten Bildparameter in Bezug auf die Trennblätter (11): Automatisches Löschen des elektronischen Scanbildes, welches dem eingescannten Trennblatt (11) entspricht.

## Beschreibung

### Technisches Gebiet

Die vorliegende Erfindung betrifft ein Verfahren zur Dokumententrennung und/oder Indexierung bei Belegen gemäß dem Oberbegriff des Patentanspruchs 1.

### Stand der Technik

In Produktionsumgebungen und bei Scan-Dienstleistern werden Dokumente nicht einzeln, sondern als ganze Dokumentenstapel gescannt. Nach dem Scan-Vorgang muss der Stapel automatisiert wieder in einzelne Dokumente aufgeteilt werden. Hierzu werden gewöhnlich Trennblätter zwischen die Dokumente eingebracht, die dann anschließend wieder händisch entfernt werden müssen.

Aus dem Stand der Technik sind bereits unterschiedliche Verfahrenzur Dokumententrennung und/oder Indexierung bei Belegen bekannt, die in einem Dokumentenstapel mit mehreren ein- oder mehrseitigen Dokumenten gescannt werden.

In der Patentschrift DE 60 2005 005 117 T2 wird ein Verfahren zur Verarbeitung eines mehrseiti-gen Dokuments beschrieben, mit den Schritten a) Empfang von Abtastbildern aus optischer Abtastung einer Folge von Seiten des mehrseitigen Dokuments, b) Verarbeiten der Abtastbilder zur Erzeugung von Seitenbildern, die den ursprünglichen Seiten des mehrseitigen Dokuments entsprechen. Das Verfahren ist dadurch gekennzeichnet, dass das Verfahren aus DE 60 2005 005 117 T2 umfasst weiterhin die folgenden Schritte: c) automatische Bestimmung von Zielkriterien für Bildparameter auf der Grundlage von Eigenschaften des mehrseitigen Dokuments, die während der Verarbeitung der Abtastbilder abgeleitet werden, b) Prüfen, ob die Bildparameter einer Seite den Zielkriterien entsprechen, und c) wenn dies der Fall ist, automatisches Akzeptieren des Seitenbildes und d) wenn es nicht der Fall ist, Darstellung des Seitenbildes für einen Benutzer für eine Korrekturaktion oder zum Akzeptieren des Seitenbildes.

Gemäß einem besonders vorteilhaften Aspekt in dieser Patentschrift ist vorgesehen, dass die Bildparameter die Seitengröße oder den Ort und die Maße eines Textbereiches umfassen. Solche Parameter sind gewöhnlich über ein mehrseitiges Dokument wie ein Buch oder Magazin hinweg konsistent. Auf der Grundlage der Detektion, ob die Bildparameter, etwa die detektierte Papiergröße, außerhalb des Zielbereichs der erwarteten Werte liegt, wird ein Ausreißer detektiert und dem Bediener angezeigt.

In der EP 2 538 371 A1 wird ein Verfahren zum Scannen von Dokumenten, insbesondere bedruckten Papierblättern, und automatischen Steuern der Weiterverarbeitung der eingescannten Dokumente beschrieben, das folgende Schritte ausgeführt: a) Manuelles Aufbringen zumindest einer Markierung auf einen nicht bedruckten Randbereich des Dokumentes, b) Einscannen des Dokumentes, c) Automatisches Erfassen der zumindest einen, auf dem Randbereich des Dokumentes aufgebrachten Markierung, und schließlich d) Automatisches Steuern der Weiterverarbeitung des Dokumentes in Abhängigkeit von der in dem Randbereich aufgebrachten Markierung.

Ein wesentlicher Nachteil der bekannten Verfahren ist darin zu sehen, dass sie sich nicht für das gezielte Einbringen von Trennblättern eignen, die sodann während des Verfahrens automatisch und nicht erst durch manuelles Einschreiten des Anwenders aus dem Dokument entfernt werden.

Ein weiterer Nachteil bei diesen bekannten Verfahren ist darin zu sehen, dass sich das anschließende Aussortieren der einzelnen Trennblätter zwischen den Dokumenten nach dem Scannen der Dokumente und Trennblätter als sehr aufwendig gestaltet und nur manuell durchgeführt werden kann. Das anschließende Entfernen dieser Trennblätter ist daher überaus zeitaufwendig und wird dementsprechend oftmals garnicht durchgeführt, was zu einem hohen Verschleiß an Trennblättern führt.

### Darstellung der Erfindung

Der vorliegenden Erfindung liegt die Aufgabe zugrunde, ein Verfahren zu schaffen, welches es ermöglicht, die einzelnen Trennblätter sicher und schnell und ohne das Eingreifen des Anwenders zu erkennen und Fehlerquellen wirksam auszuschließen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Das erfindungsgemäße Verfahren zur Dokumententrennung und/oder Indexierung bei Belegen, die in einem Dokumentenstapel mit mehreren ein- oder mehrseitigen Dokumenten sowie zwischen den einzelnen Dokumenten eingebrachten Trennblättern gescannt werden, umfasst erfindungsgemäß die folgenden aufeinanderfolgenden Verfahrensschritte:
a) Empfang von Scanbildern durch optisches Scannen einer Folge von Seiten des Dokumentenstapels mittels eines Scanners;
b) Verarbeitung der einzelnen Scanbilder zur Erzeugung von elektronischen Seitenbildern in einem elektronischen Scandokument, die in ihrer Bildgröße den ursprünglichen Seiten der Dokumente und den ursprünglichen Trennblättern entsprechen;
c) Festlegung unterschiedlicher Kriterien für Bildparameter, nämlich der Bildgröße der Seiten der Dokumente und/oder der Trennblätter, die entweder automatisch während der Verarbeitung der elektronischen Scanbilder auf der Grundlage von Eigenschaften des Dokumentenstapels abgeleitet oder im Vorfeld einer nachfolgenden Überprüfung durch den Anwender festgelegt werden;
d) Durchführung einer Überprüfung, ob die Bildgröße eines elektronischen Scanbildes innerhalb des Scandokuments den festgelegten Kriterien entspricht;
e) entspricht die Bildgröße eines elektronischen Scanbildes der Bildgröße des eingescannten Trennblattes und/oder dem durch den Anwender festgelegten Bildparameter in Bezug auf die Trennblätter: Automatisches Löschen des elektronischen Scanbildes, welches dem eingescannten Trennblatt entspricht.

Für die Dokumententrennung wird hierzu vorzugsweise ein Trennblatt mit einer zuvor definierten Größe verwendet. Im Idealfall ist das Trennblatt etwas breiter als die zu scannenden Belege und ca. 10 cm hoch. Ein Papier mit einem höheren Gewicht (ca. 190 g/qm) erleichtert das Ein- und Aussortieren der Trennblätter. Es können z. B. herkömmliche Trennstreifen für Leitzordner verwendet werden.

Wie bei der Dokumententrennung mittels Patch-Blatt muss vor dem Scan-Vorgang zunächst zwischen jedem Dokument ein Trennblatt einsortiert werden.

Beim Scan-Vorgang erzeugt der Dokumentenscanner ein Bild, das der Größe des Originals entspricht. Die Software prüft jedes Images und berechnet - unter Berücksichtigung der Auflösung - die Höhe und Breite des Originalbelegs. Entspricht die Größe dem Trennblatt, dann wird eine Dokumententrennung durchgeführt und das Bild des Trennblatts gelöscht.

### Kurzbeschreibung der Zeichnungen

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnungen.

In den Zeichnungen zeigen
Fig. 1 einen Dokumentenstapel mit mehreren Dokumenten und eingelegten mit eingelegten Trennblättern;
Fig. 2 ein Ausführungsbeispiel eines Trennblattes.

### Ausführung der Erfindung

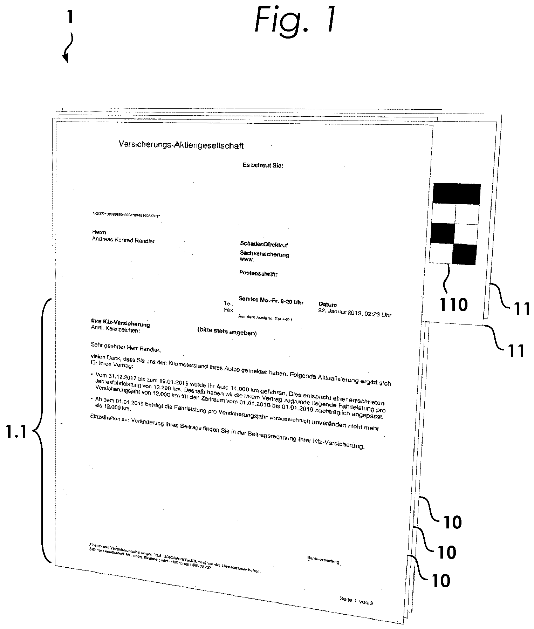

Wie aus Fig. 1 ersichtlich, werden zum Lösen des Problems des anschließenden Aussortierens der einzelnen Trennblätter 11 aus dem Dokumentenstapel 1 in einer vorteilhaften Asuführungsform der Erfindung vor a) Trennblätter 11 zwischen die Seiten der einzelnen Dokumente 10 zur Erstellung des Scandokuments mit diesen Trennblättern 11 eingebracht, die in ihrer Bildgröße von den Seiten der Dokumente 10 abweichen.

Hierbei kann es besonders vorteilhaft sein, dass die Trennblätter 11 zwischen den Seiten der Dokumente 10 derart platziert sind oder werden, dass sämtliche Seiten aller Dokumente 10 des Dokumentenstapels 1 zumindest in einem gemeinsamen Klemmbereich (1.1) des Dokumentenstapels unmittelbar aufeinanderliegen, derart, dass zwischen den Dokumenten 10 in diesem Klemmbereich 1.1 keinerlei Trennblätter 11 zwischen den Dokumenten 10 eingebracht sind.

Nach e) werden die Trennblätter 11 dann einfach aus dem Dokumentenstapel 1 mittels Schütteln und/oder Vibrieren des Dokumentenstapels 1 entfernt werden. Hierzu kann es vorteilhaft sein, dass vor a) zwischen die einzelnen Dokumente 10 Trennblätter 11 mit einem gegenüber den einzelnen Seiten der Dokumente 10 höheren spezifischen Gewicht eingebracht werden.

Zur Einleitung des Schüttelns und/oder Vibrierens stellt die vorliegende Erfindung vorzugsweise eine Vorrichtung bereit, die mindestens ein Halte- oder Klemmmittel umfasst, mittels dem der Dokumentenstapel 1 in einem gemeinsamen Klemmbereich gehalten oder geklemmt ist, wobei die Vorrichtung weiterhin eine mit dem Halte- oder Klemmmittel verbundene Einrichtung zum Schütteln und/oder Vibrieren aufweist, mittels dem der mit dem Halte- oder Klemmmittel gehaltene oder geklemmte Dokumentenstapel 1 schüttel- und/oder vibrierbar ist.

Selbstverständlich kann dieser Vorgang besonders bevorzugt natürlich auch manuell, also händisch durch den Anwender erfolgen.

Zur Durchführung des erfindungsgemäßen Verfahrens stellt die Erfindung ferner ein Trennblatt 11 bzw. Trennblätter 11 für die weitere Verarbeitung im Rahmen des Überprüfungsprozesses nach Anspruch 1 d) bereit, bei dem in einem Seitenbereich 11.1 des Trennblatts 11 mindestens ein Code 110 aufgedruckt oder aufgebracht ist, der aus mehreren geometrischen Figuren, vorzugsweise Quadraten, gebildet ist.

Das erfindungsgemäße Verfahren sieht vorteilhaft vor, dass die Position der geometrischen Figuren des Codes 110 auf den Trennblättern 11 und deren Schwärzungsgrad mittels des Scannens ermittelt wird, wobei dem Schwärzungsgrad der geometrischen Figuren ein definierter binärer Wert zugeordnet wird, der abhängig vom Schwärzungsgrad ist.

Hierbei kann es weiterhin vorteilhaft sein, dass mindestens ein Sicherheitswert durch den Anwender konfiguierbar ist, wobei eine Dokumententrennung in Form der Löschung des betreffenden Trennblattes aus dem Dokumentenstapel 1 nur durchgeführt wird, wenn der Wert des Trennblattes 11 mit dem mindestens einen konfigurierten Sicherheitswert übereinstimmt.

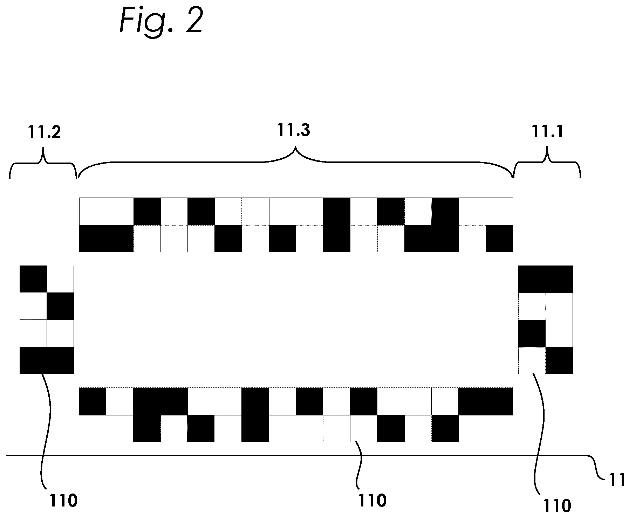

Der Code 110 (Sicherheitscode) ist vorzugsweise auf der linken Seite des Trennblatts 11 aufgedruckt. Wie aus den Fign. 1 und 2 ersichtlich, besteht dieser vorteilhafterweise aus 2 × 4 Quadraten mit einer bevorzugten Seitengröße von 10 mm. Die Software berechnet die Position der geometrischen Figuren und ermittelt den Schwärzungsgrad der Felder. Entspricht der Schwärzungsgrad einem bestimmten Wert, bspw. über 50%, wird das Feld als binäre 0 gewertet. Ist der Schwärzungsgrad geringer, dann wird das Feld als binäre 1 gewertet. Im Gegensatz zur Mustererkennung bei Barcode erzeugt diese Methode nur sehr geringe CPU-Last und ist sehr schnell. Mit den vorzusweise 8 Feldern können 256 Werte dargestellt werden. In der Software kann als Sicherheitscode ein Wert zwischen 0 und 255 konfiguriert werden. Wird der Sicherheitscode verwendet, dann führt die Software nur dann eine Dokumententrennung durch, wenn der Wert mit dem konfigurierten übereinstimmt.

Der Sicherheitscode kann zusätzlich in umgekehrter Reichenfolge in einem gegenüberliegenden Seitenbereich 11.2 des Trennblatts 11 aufgedruckt oder aufgebracht sein. Dadurch wird ein Trennblatt 11 auch dann erkannt, wenn es kopfüber einsortiert wurde.

Eine weitere bevozugte Ausführungsform des erfindungsgemäßen Verfahrens sieht vor, dass in einem weiteren Seitenbereich 11.3 des Trennblatts 11 Index-Daten aufgedruckt oder aufgebracht sind. Der Index-Bereich besteht dabei vorzugsweise aus mehreren Zeilen mit jeweils einer Vielzahl, vorzugsweise jeweils 16, geometrischer Figuren, vorzugsweise Quadraten, wobei auch hier vorzugsweise der Schwärzungsgrad der einzelnen Felder ermittelt wird und eine Schwärzung von einem definierten Wert von vorzugsweise über 50% als binäre 0, und Werte unter diesem definierten Wert als binäre 1 gewertet werden.

### Liste der Bezugsziffern

- 1: Dokumentenstapel
- 1.1: Klemmbereich
- 10: Dokumente
- 11: Trennblätter
- 11.1,11.2,11.3: Seitenbereiche des Trennblatts
- 110: Code

## Patentansprüche

1. Verfahren zur Dokumententrennung und/oder Indexierung bei Belegen, die in einem Dokumentenstapel (1) mit mehreren ein- oder mehrseitigen Dokumenten (10) sowie zwischen den einzelnen Dokumenten (10) eingebrachten Trennblättern (11) gescannt werden, welches folgende aufeinanderfolgende Verfahrensschritte umfasst:
a) Empfang von Scanbildern durch optisches Scannen einer Folge von Seiten des Dokumentenstapels (1) mittels eines Scanners;
b) Verarbeitung der einzelnen Scanbilder zur Erzeugung von elektronischen Seitenbildern in einem elektronischen Scandokument, die in ihrer Bildgröße den ursprünglichen Seiten der Dokumente (10) und den ursprünglichen Trennblättern (11) entsprechen;
c) Festlegung unterschiedlicher Kriterien für Bildparameter, nämlich der Bildgröße der Seiten der Dokumente und/oder der Trennblätter (11), die entweder automatisch während der Verarbeitung der elektronischen Scanbilder auf der Grundlage von Eigenschaften des Dokumentenstapels (1) abgeleitet oder im Vorfeld einer nachfolgenden Überprüfung durch den Anwender festgelegt werden;
d) Durchführung einer Überprüfung, ob die Bildgröße eines elektronischen Scanbildes innerhalb des Scandokuments den festgelegten Kriterien entspricht;
e) entspricht die Bildgröße eines elektronischen Scanbildes der Bildgröße des eingescannten Trennblattes (11) und/oder dem durch den Anwender festgelegten Bildparameter in Bezug auf die Trennblätter (11): Automatisches Löschen des elektronischen Scanbildes, welches dem eingescannten Trennblatt (11) entspricht.

2. Verfahren nach Anspruch 1,
**dadurch gekennzeichnet, dass**
vor a) Trennblätter (11) zwischen die Seiten der einzelnen Dokumente (10) zur Erstellung des Scandokuments mit diesen Trennblättern (11) eingebracht werden, die in ihrer Bildgröße von den Seiten der Dokumente (10) abweichen.

3. Verfahren nach Anspruch 2,
**dadurch gekennzeichnet, dass**
die Trennblätter (11) zwischen den Seiten der Dokumente (10) derart platziert sind oder werden, dass sämtliche Seiten aller Dokumente (10) des Dokumentenstapels (1) zumindest in einem gemeinsamen Klemmbereich (1.1) des Dokumentenstapels (1) unmittelbar aufeinanderliegen.

4. Verfahren nach Anspruch 2 und/oder 3,
**dadurch gekennzeichnet, dass**
nach e) die Trennblätter (11) aus dem Dokumentenstapel (1) mittels Schütteln und/oder Vibrieren des Dokumentenstapels (1) entfernt werden.

5. Verfahren nach einem der vorangeganenen Ansprüche,
**dadurch gekennzeichnet, dass**
zwischen die einzelnen Dokumente (10) Trennblätter (11) mit einem gegenüber den einzelnen Seiten der Dokumente (10) höheren spezifischen Gewicht eingebracht werden.

6. Trennblatt (11) zur Durchführung eines Verfahrens nach einem oder mehreren der vorangegangenen Ansprüche 1 bis 5,
**dadurch gekennzeichnet, dass**
für die weitere Verarbeitung im Rahmen des Überprüfungsprozesses in einem Seitenbereich (11.1) des Trennblatts (11) mindestens ein Code aufgedruckt oder aufgebracht ist, der aus mehreren geometrischen Figuren, vorzugsweise Quadraten, gebildet ist.

7. Trennblatt (11) nach Anspruch 6,
**dadurch gekennzeichnet, dass**
der Sicherheitscode zusätzlich in umgekehrter Reichenfolge in einem gegenüberliegenden Seitenbereich (11.2) des Trennblatts (11) aufgedruckt oder aufgebracht ist.

8. Trennblatt (11) nach Anspruch 5 oder 6,
**dadurch gekennzeichnet, dass**
das Trennblatt (11) ein höheres spezifisches Gewicht aufweist als die einzelnen Seiten der Dokumente (10).

9. Verfahren zum Auslesen des Codes auf einem Trennblatt (11) nach Anspruch 5 oder 6 zur Durchführung eines Verfahrens nach einem oder mehreren der vorangegangenen Ansprüche 1 bis 5,
**dadurch gekennzeichnet, dass**
die Position der geometrischen Figuren auf den Trennblättern (11) und deren Schwärzungsgrad mittels des Scannens ermittelt wird, wobei dem Schwärzungsgrad der geometrischen Figuren ein definierter binärer Wert zugeordnet wird, der abhängig vom Schwärzungsgrad ist.

10. Verfahren nach Anspruch 9,
**dadurch gekennzeichnet, dass**
mindestens ein Sicherheitswert durch den Anwender konfiguierbar ist, wobei eine Dokumententrennung in Form der Löschung des betreffenden Trennblattes (11) aus dem Dokumentenstapel (1) nur durchgeführt wird, wenn der Wert des Trennblattes (11) mit dem mindestens einen konfigurierten Sicherheitswert übereinstimmt.

11. Verfahren nach Anspruch 9 oder 10,
**dadurch gekennzeichnet, dass**
bei Überschreitung eines definierten Schwärzungsgrades das Feld als binäre 0 und bei einem geringeren Schwärzungsgrad als dem definierten Wert das Feld als binäre 1 gewertet wird.

12. Trennblatt (11) zur Durchführung eines Verfahrens nach einem oder mehreren der vorangegangenen Ansprüche 1 bis 5 und 7 bis 9,
**dadurch gekennzeichnet, dass**
in einem weiteren Seitenbereich (11.3) des Trennblatts (11) Index-Daten aufgedruckt oder aufgebracht sind.

13. Trennblatt (11) nach Anspruch 12,
**dadurch gekennzeichnet, dass**
der Index-Bereich aus mehreren Zeilen mit jeweils einer Vielzahl, vorzugsweise jeweils 16, geometrischer Figuren, vorzugsweise Quadraten - besteht.

14. Verfahren zum Auslesen des Codes auf einem Trennblatt nach Anspruch 13 zur Durchführung eines Verfahrens nach einem oder mehreren der vorangegangenen Ansprüche 1 bis 5 und 9 bis 11,
**dadurch gekennzeichnet, dass**
der Schwärzungsgrad der einzelnen Felder ermittelt wird.

15. Verfahren nach Anspruch 14,
**dadurch gekennzeichnet, dass**
eine Schwärzung von über einen definierten Wert als binäre 0, und Werte unter diesem definierten Wert als binäre 1 gewertet werden.
